# EUROPEAN PATENT SPECIFICATION

(11) **EP 1 206 080 B1**
(45) Date of publication and mention of the grant of the patent: **12.03.2008**
(21) Application number: 00124472.2
(22) Date of filing: 08.11.2000
(51) Int. Cl.: H04L 12/56

(54) **Computer software product and method for a communication device and a resource device for an unmanaged communication network**
Computer-Software Produkt und Verfahren für eine Kommunikationseinheit und eine Hilfsmitteleinheit für ein nicht kontroliertes Kommunikationsnetz
Logiciel et procédé pour un dispositif de transmission et un dispositif de ressource pour un réseau de transmission non-contrôlé

(43) Date of publication of application: 15.05.2002
(73) Proprietor: Sony Deutschland GmbH, 10785 Berlin (DE)
(72) Inventor: Mandato, Davide, Sony International (Europe) GmbH, Hedelfinger Strasse 61, 70327 Stuttgart (DE)
(74) Representative: Körber, Martin Hans

(56) References cited:
- WO-A-00/62496
- GIAN PIETRO PICCO, AMY L. MURPHY, GRUIA-CATALIN ROMAN: "Lime: Linda Meets Mobility" INTERNET, 1999, pages 368-377, XP002165975 Washington University
- PRASANNA K. ANANTHA RAJU: "QoS and network performance based evaluation of distributed mobile systems" INTERNET, 27 July 1999 (1999-07-27), pages 1-4, XP002165976

## Description

The present invention relates to methods for managing reservations of shared resources in a unmanaged communication network and to corresponding computer software products. Generally, the present invention is related to the field of mobile multimedia middleware, shared resource reservation mechanisms, mobile ad-hoc networks, distributed processing systems, handheld computers, computer networking and wireless communication.

An unmanaged network as e.g. a mobile ad-hoc network comprises a set of nodes, i.e. fixed or mobile devices, which connect to each other through communication links on a spontaneous, unmanaged basis. The devices of such an unmanaged network comprise e.g. communication devices for communicating data, resource devices for providing service functionalitiy to the devices in the network, and the like. In practice, the nodes of the unmanaged network, i.e. static or mobile devices, comprise computing units, as e.g. single or multiprocessor units, which are connected to network-interface units. Given the inherently spontaneous and thus unmanaged nature of such a network, nodes must be uniquely identified by randomly allocating a proper network identifier (address) to each node at the time the node joins the network (mobile ad-hoc network).

In order to perform a given set of tasks, nodes can communicate with each other by exchanging information via messages across the set of mobile ad-hoc network links. Typically, mobile ad-hoc networks employ wireless communication links, but mix and match solutions may exist, in which certain links consist of ad-hoc cable connections. Links are characterised by a set of physically related attributes identifying the Quality of service links can support, such as the maximum bandwidth allowed and the maximum and minimum transport delay. Such parameters influence the message transmission performance.

In the context of such a unmanaged network, topology changes may occur insofar as nodes may join, move, and leave the network spontaneously. Besides, links may become unavailable due to nodes network interfaces hardware failures and/or to environmental conditions (as e.g. weather conditions) that can degrade the wireless link quality (e.g. radio frequency or infrared signal power) used for wireless communication links between nodes of the network. Given the wireless nature of such links, environmental conditions can thus also effect the quality of service properties of communication links, whereby the properties can thus change over time.

Proper routing capabilities are provided in each node in order to forward any received message which a given node is not the recipient of. Given the time variant characteristic of links Quality of service properties and the typical multimedia applications dependency on such parameters, the routing algorithm to be used in mobile ad-hoc networks can be designed to take into account such link properties. Messages to be forwarded are thus routed over the least-cost links, which ensure that the overall path Quality of service properties actually meet a given multimedia applications quality of service requirement.

On top of any network model, at application level, one can identify logical entities called services or resources, which can be used as building blocks for creating complex multimedia applications. A service or a resource is either a hardware or a software unit providing a useful, general purpose functionality for other devices in the network. The model behind the concept of services or resources is the client-server architecture, in which multimedia applications request a service to be performed by using a client software unit, which communicates over a network connection with a server software unit. The later is the entity, which is actually in charge of performing the function remotely requested by the multimedia application. A typical example is a shared printer device, where multimedia applications send a text message to the printer through a client printer program located in the computing unit where the user application resides.

Services can be made available for devices in a mobile ad-hoc network by placing them onto one or more nodes of the network. Therefore, the devices need first to discover the services or resources available in the given mobile ad-hoc network before selecting and using the one that best fits the multimedia applications needs out of a pool of equivalent services or resources. Besides, the presence of the services should be monitored in the mobile ad-hoc network in order to timely be informed of and adapt to any changes in the services availability.

On the other hand, mobile ad-hoc network nodes providing services or resources need to advertise their services availability in the network by indicating - if necessary - any specific service characteristic that might be helpful for multimedia applications in order to properly select the service or the resource of choice. For example, a node managing a pool of printer devices can publish each of them along with a set of parameters, which specify what kind of data format each printer can support, whether a given printer is able to print black and white or coloured pictures and so forth. These service attributes may even be dynamically changed in order to reflect a certain status of the given service or resource. Such changes can be done either by the node controlling the service or by a remote node. In both cases, special service management interfaces are required, along with an authentication mechanism to restrict access to unauthorised personal. On the other hand, any service attribute change should be immediately notified to every multimedia application that might be interested in such events.

Currently, there is a vast set of vendors-proprietary and/or standardised technologies that can be effectively used in order to create multimedia applications over different types of networked environments. Examples of such technologies or related technologies are named in the following. In relation to activation and persistency framework, Sun Microsystems, Inc., provides the Java activation framework. As device discovery protocols, Bluetooth SIG proposes the Bluetooth technology and Motorola Inc. proposes the Piano technology. Sun Microsystems Inc. proposes the Jini technology in relation to dynamic service attributes. An example for a mobile ad-hoc networks is the MANET-technology proposed by the Internet Engineering Task Force (IETF). IETF further proposes the INSIGNIA technology for quality of service based routing protocols for mobile ad-hoc networks. Mobile multimedia applications over mobile ad-hoc networks are proposed on the basis of the Bluetooth technology by Bluetooth SIG and the Piano technology by Motorola Inc. Service discovery protocols are proposed by Sun Microsystems Inc. in the Jini technology, by IETF in the simple service discovery protocol (SSDP) and service location protocol (SLP) and by Motorola Inc. in the Piano technology. The concept of tuple spaces for mobile computing has been proposed by David Gelernter in the Linda technology and by Sun Microsystems Inc. in the Java spaces technology. The issue of quality of service in a mobile environment on the basis on tuple spaces is discussed by G.S. Blair, N. Davis, A. Friday, S.P. Wade in "Quality of service support in a mobile environment: An approach based on tuple spaces", distributed multimedia research group, department of computing, Lancaster University, Lancaster, UK. The use of distributed databases in mobile ad-hoc networks has been analysed by Z. J. Haas and B. Liang to devise a Uniform Quorum System addressing User mobility Management, in "Ad Hoc Mobility Management With Uniform Quorum Systems." Gian Peitro Picco, Amy L. Murphy and Gruia-Catalin Roman of the Department of Computer Science, Washington University, St. Louis, MO, USA disclose in their publication "Lime: Linda meets Mobility" a software system providing a communication facility for mobile software agents residing on mobile hosts in an ad-hoc network. With every software agent there is connected an interface tuple space, which is co-located with the software agent on the same mobile host. The interface tuple spaces of the software agents are transiently shared which is meaning that the tuples residing in a given agent's interface tuple space can be accessed by another agent as long as connectivity exists between the two agents. In the article "QoS and network performance based evaluation of distributed mobile systems" of Prasanna K. Anantha Raju, different protocols and architectures, including the tuple space paradigm and the event manager paradigm, which are used or proposed to be used for mobile distributed systems, are reviewed and advantages and disadvantages of the protocols and architectures in relation to resource reservation in case of user mobility are presented.

The object of the present invention is to provide methods and corresponding computer software products which provide a better management of reservations of shared resources in an unmanaged communication network in case of unanticipated disconnection of communication devices and/or resource devices.

The above object is achieved by a first method for managing, by means of a virtual reservation space manger located in a communication device for communicating data in an unmanaged communication network, reservations of shared resources in said communication network on the basis of reservation information distributed among other devices of the network wherein said virtual reservation space manager comprises a private tuple space associated with the communication device said private tuple space comprising information about reservations of resources, the method comprising replicating the private tuple spaces of all other devices of the network in said virtual reservation space manager, whereby said private tuple space, together with corresponding replicates of private tuple spaces of said other devices in said communication network, forms an overall virtual tuple space for coordinating the reservation of shared resources in said network.

The private tuple spaces are advantageously updated upon the occurrence of any changes in or in respect to their content.

Further advantageously, the virtual reservation space manager reserves a resource comprising a private tuple space by moving a reservation token from the private tuple space of the resource to its own private tuple space. Hereby, the virtual reservation space manager may copy a ticket dispenser tuple from a private tuple space of a resource to be reserved, extract a ticket indicating a service number, increment a service number of the ticket dispenser tuple and move the ticket dispenser tuple back to the private tuple space of the resource, whereby the resource is accessed when the virtual reservation space manager succeeds in taking the service number tuple from the private tuple space of the resource, upon successful matching of the previously extracted service number, with the current service number contained in said tuple. Hereby, the virtual reservation space manager, when the resource is disconnected from the communication device, may drop any ticket dispenser tuple, ticket, service number tuple and/or service number relating to the resource from the virtual reservation space manager. Further, the virtual reservation space manager, when other devices of the network are disconnected but said resource is not disconnected from the communication device, marks the private tuple spaces relating to the disconnected devices as deprecated and drops them later while ensuring that the sequence number of the resource is incremented correctly. Hereby, the virtual reservation space manager may drop any of said depreciated tuples or reservation information only after expiration of a predetermined grace period. Advantageously, the reservation and access of the resource is based on predetermined leasing time periods.

Advantageously, the virtual reservation space manager reserves a resource not comprising a private tuple space by creating and storing a reservation token for the resource in a proxy tuple space, which is a local copy of a resource's fictitious personal tuple space, said proxy tuple space serving as the distributed private tuple space of the resource. Hereby, the virtual reservation space manager may copy a ticket dispenser tuple from the proxy tuple space of the resource to be reserved, extract a ticket indicating a service number, increment a sequence number of the ticket dispenser tuple, and move the ticket dispenser tuple back to the proxy tuple space of the resource, whereby the resource is accessed when the virtual reservation space manager succeeds in taking the service number tuple from the private tuple space of the resource, upon successful matching of the previously extracted service number, with the current service number contained in said tuple. Hereby, the virtual reservation space manager, when the resource is disconnected from the communication device, drops any ticket dispenser tuple, ticket, service number tuple and/or service number relating to the resource from the virtual reservation space. Advantageously, the virtual reservation space manager, when other devices of the network are disconnected but said resource is not disconnected from the communication device, marks the private tuple spaces relating to the disconnected devices but as deprecated and drops them later while ensuring that the sequence number of the resources is incremented correctly. Hereby, the virtual reservation space manager may drop any of said deprecated tuples or reservation information only after expiration of a predetermined grace period. Advantageously, the reservation and the access of the resource not comprising a private tuple space is based on predetermined leasing time periods.

Further advantageously, the computer software product comprises a synchronisation means for generating and providing synchronisation information, necessary to enforce the proposed method, for other devices and resources in the network.

The above object is further achieved by a second method for managing, in cooperation with the above first method and by means of a virtual reservation space manager located in a resource device for providing a functionality for other devices in an unmanaged communication network, reservations of the resource in said communication network on the basis of reservation information distributed among the other devices of the network wherein said virtual reservation space manager comprises a private tuple space associated with the resource device, said private tuple space comprising information about reservations of the resource, the method comprising replicating the private tuple spaces of all other devices of the network in said virtual reservation space manager, whereby said private tuple space, together with corresponding replicates of private tuple spaces of said other devices in said communication network, forms an overall virtual tuple space for coordinating the reservation of the resource in said network.

The private tuple spaces may be updated upon the occurrence of any changes in or in respect to their content.

Further advantageously, the virtual reservation space manager reserves the resource for a device by moving a reservation token from the private tuple space of the resource to a private tuple space of the device. Hereby, the reservation token comprises a ticket dispenser tuple from which a ticket indicating a service number can be extracted by a device, whereafter a sequence number of the ticket dispenser tuple is incremented and the ticket dispenser tuple is moved back to the private tuple space of the resource, whereby the resource is accessed when the virtual reservation space manager succeeds in taking the service number tuple from the private tuple space of the resource, upon successful matching of the previously extracted service number, with the current service number contained in said tuple. The virtual reservation space manager, when the resource is disconnected from a device, may retrieve any ticket dispenser tuple and service number tuple from the replicate of the private tuple space of the device back to its own private tuple space and drop the replicate of the private tuple space of the device thereafter. Advantageously, the virtual reservation space manager drops any as said deprecated tuples or reservation information only after expiration of a predetermined grace period. Further advantageously, a synchronisation means for generating and providing synchronisation information, necessary to enforce the proposed method, for other devices and resources in the network is provided.

The object is further achieved by a computer software product comprising program information, that when executed by a program execution device, executes the first method and a computer software product comprising program information, that when executed by a program execution device, executes the second method.

The present invention is particularly advantageous in extending the concept introduced in the European patent application EP-A-1 107 512 of the applicant. More specifically, the present invention proposes an advantageous concept of a shared resource reservation in unmanaged networks in respect of the virtual device manager (VDM) concept introduced by the above-mentioned European patent application.

In relation to the prior art discussed above, the present invention is advantageous in maintaining an unmanaged network wide topology model and consequently updated copies of tuple spaces of the other nodes in the network. Further, the present invention proposes a resource reservation mechanism for a completely unmanaged network, where no infrastructure is available whatsoever, by coordinating mutually exclusive access to resources. Further, according to the present invention, reservation data are distributed among the nodes of the network and replication is used for reliability reasons only. Data is named according to the node where it is contained. Users try to access the state of a resource by addressing the resource explicitly, and not relying on some form of replicated data. Further, reservation data is accessed in mutual exclusion. There is no need for distributed transactions, since the reservation is regulated by mutually exclusive mechanisms which are made available by the resource devices themselves. On the contrary, the topology model according to the present invention is actually a replicated database. The prior art focuses on traditional databases, whereby the present invention addresses the topology model as a tuple space acting to this extent as a replicated database in combination with a coordination framework. This database is integrated with the rest of the virtual reservation space manager.

The particular advantage of the virtual tuple space concept of the present invention is the use of distributed tuple spaces to manage resource reservations in unmanaged networks, such as mobile ad-hoc networks. A further advantage is the ability to recover from network partitionings and rejoinings in a simple and flexible way. The use of the proxy concept provides the advantageous ability to use dumb shared resources, such as scanners and the like, being unaware of a virtual reservation space manager, in a mutually exclusive way. The proxy, such as a laptop, can be permanently or ad-hoc configured to use a dumb shared resource such as a scanner or a beamer. Particularly, the virtual reservation space manager concept according to the present invention provides the advantageous ability for an application of dumb shared resource devices which are already equipped with access control mechanisms and unmanaged network capability, such as shared resource devices with mutually exclusive, queuing access control mechanisms. Further, the topology model according to the present invention enables an advantageous use for browsing the set of services and resources in an unmanaged network and an advantageous use for an automatic virtual tuple space reconfiguration. It is to be noted, that the topology model is not used for any management functions in the network.

The present invention is explained in more detail in the following description in relation to the enclosed drawings, in which
figure 1 shows an unmanaged network visualising the virtual tuple space concept for a shared resource reservation according to the present invention,

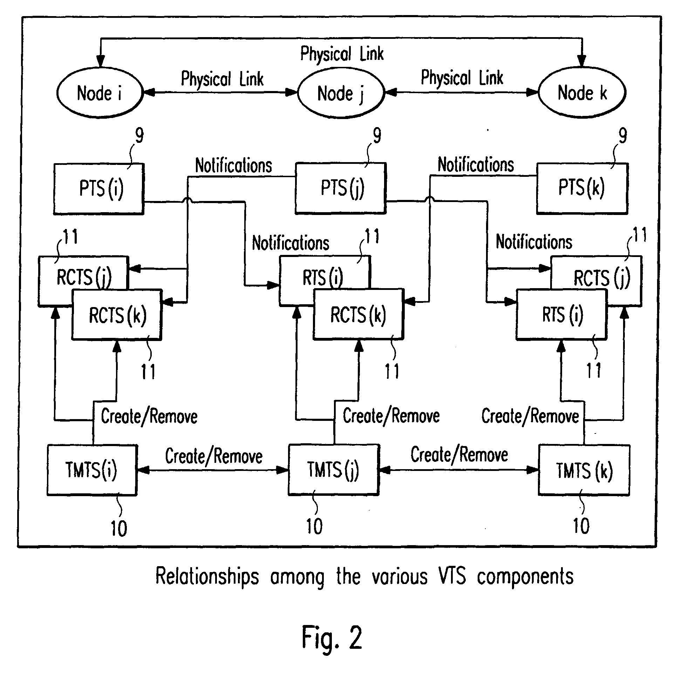

figure 2 shows a block diagram of several nodes of an unmanaged network visualising the relationships among various virtual tuple space components,
figure 3 shows a block diagram of a virtual reservation space manager according to the present invention,

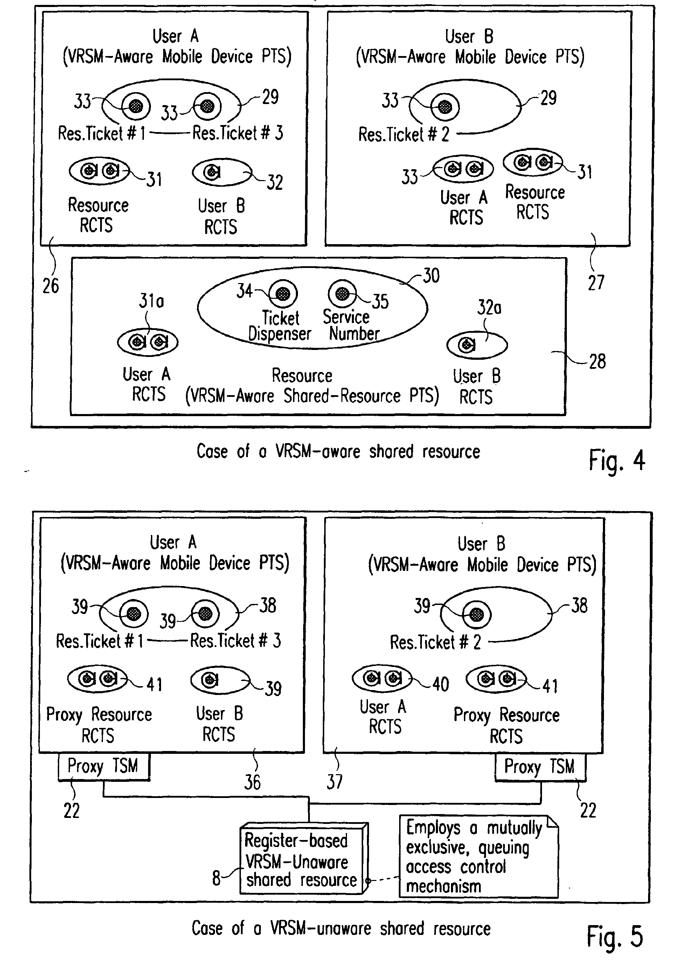

figure 4 shows a schematic diagram for explaining the reservation of the access to a shared resource being aware of a virtual reservation space manager, and
figure 5 shows a schematic diagram explaining the access to a shared resource not being aware of a virtual reservation space manager.

In the following tables, several terms and abbreviations used in the following descriptions are explained.

### 1. Terminology

| **Term** | **Definition** |
|---|---|
| Mobile Ad-Hoc Network | Set of fixed and/or mobile device establishing communication links among them on a spontaneous, unmanaged basis. |
| Shared-Resource | Any fixed and/or mobile device offering a useful general-purpose functionality to other devices. |
| Reservation | The exclusive permission to use a shared-resource, the latter grant to one (or a limited set) of the prospective fixed and/or mobile devices. |
| Tuple Space | A shared, persistent, associative, transaction-secure, network-accessible repository for objects identified as tuples. One can retrieve objects from said space by specifying either completely or partially the tuple composition corresponding to the desired object. The Tuple Space inherently provides a synchronization framework, insofar as its objects can be retrieved atomically. |
| MAHN Partition | The event associated with some MAHN nodes being no longer reachable from other MAHN nodes |
| MAHN Fragment | One of the MAHNs originated as byproducts after the partition of a given one. |
| MAHN Joining | The event associated with some new devices creating and/or coming into proximity of (and thus participating in) a given MAHN. |
| MAHN Rejoining | The event associated with some devices, previously partitioned from a given MAHN, joining once again said MAHN at a later time |

### 2. Abbreviations

| | |
|---|---|
| ACM | Ad-Hoc Computing Manager |
| API | Application Programming Interface |
| COTS | Commercial Off-The-Shelf |
| DDM | Device Discovery Manager |
| EPA | European Patent Application |
| GUI | Graphical User Interface |
| HW | Hardware |
| IP | Internet Protocol |
| MAHN | Mobile Ad-Hoc Network |
| PDA | Personal Data Assistant |
| PTS | Private Tuple Space |
| QoS | Quality of Service |
| QRM | QoS Based Routing Manager |
| RCTS | Remote Copy Tuple Space |
| SDM | Service Discovery Manager |
| SW | Software |
| TM | Transaction Manager |
| TMTS | Topology Model Tuple Space |
| TSM | Tuple Space Manager |
| TV | Topology View |
| UML | Unified Modeling Language |
| VDM | Virtual Device Manager |
| VRS | Virtual Reservation Space |
| VRSM | Virtual Reservation Space Manager |

### 3. Description of the Invention

### 3.1. Introduction

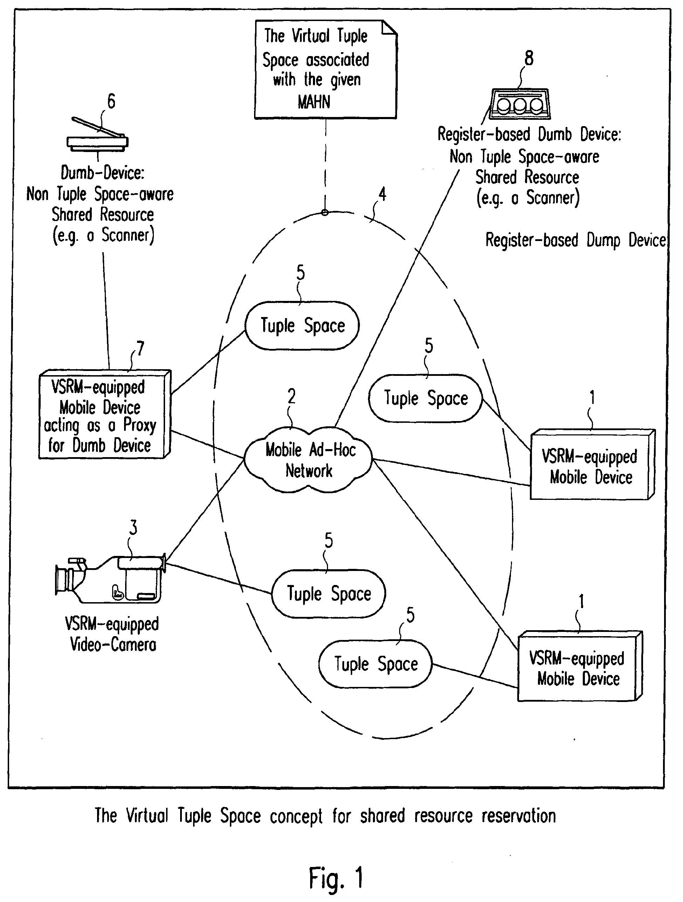

Figure 1 depicts the case of a set of fixed and/or mobile devices (thereinafter, the *users*) 1 forming a MAHN 2, and trying to share a set of resources 3, 6, 8. Some resources 3 may eventually take also the user role, and vice versa. Furthermore, each MAHN node can host a multiplicity of user and resource roles.

In order to offer Virtual Device Manager functionality explained in EP-A-1 107 512 of the applicant a method and middleware are provided for sharing resources in MAHNs in a coordinated and yet unmanaged manner.

The VDM can in fact prepare Virtual Devices (representing the automatic combination of GUIs of resources discovered in the surroundings), only if the VDM has the possibility to book such resources in a mutually exclusive way.

The present invention introduces the concept of a Virtual Reservation Space (VRS): by sharing reservation information through the VRS, each MAHN node gains knowledge about the global reservation status of all resources available in the given MAHN.

This method associates a Tuple-Space 5 with each node (i.e. a mobile device or a shared-resource) of a MAHN, by introducing the concept of an overall Virtual Tuple Space (VTS) 4 associated with the given MAHN.

The VTS is the logical union of the aforementioned MAHN nodes' Tuple Spaces 5. The VTS is implemented by replicating the own Tuple Spaces 9 of each MAHN node in every other MAHN node.

The VTS is used for coordinating shared-resources reservations.

At any given time, mobile devices 1, 3 and/or shared resources 3, 6, 8 joining a given MAHN will be automatically detected and a specific Topology Model Tuple Space (TMTS) 10 will be correspondingly updated. A copy of the TMTS is installed on each mobile device and (if possible) on each shared-resource. The topology view offered by the TMTS covers the whole MAHN, i.e. not only the portion of the MAHN as seen by a given node. Any TMTS update is reflected automatically to the VTS.

In case of shared-resources equipped with own Tuple Spaces 3, 6 each mobile device 1 trying to use one of said resources, shall try to move a reservation token (i.e. a tuple) from the given resource's own Tuple Space into the its own Tuple Space.

In case of shared-resources not equipped with own Tuple Spaces but still providing some mutually exclusive access, queuing control mechanism 8, each mobile device trying to use any of said resources shall create and store in its own Tuple Space the corresponding reservation token. This action shall take place only when the mobile device has been granted access to the given resource. Actually some resources 8 might be modelled also as multithreaded servers, i.e. as resources capable of serving up to a maximum number of concurrent requests. In such a case, the reservation mechanism described in § 3.5 can still be applied, provide that a multiplicity (equivalent to the maximum number of concurrent users that the given resource can sustain) of the set forth below distributed synchronisation mechanism, is put in place. Alternatively, a more compact variant of such mechanism can be provided. However, this invention mostly focuses on resources like a beamer of a printer, whose users can be exclusively served once at time.

Any event involving reservation tokens shall be notified to each mobile device belonging to the given MAHN, by distributing the given event to the VTS.

A software program, the Virtual Reservation Space Manager (VRSM), implementing the overall VRS method is hereby described.

### 3.2 Information Viewpoint

Each node equipped with a VRSM manages (i) a local private Tuple Space (PTS) 9, (ii) a Tuple Space describing the MAHN topology (TMTS) 10, and (iii) one copy of the PTS of each remote node, called the Remote Copy TS (RCTS) 11.

The PTS 9 stores as tuples the information about reservations (made by the given node) of resources available in the surroundings.

The Device Discovery and Service Discovery events (indicating newly discovered and/or disappeared devices/services), generated by (respectively) the DDM 18 and SDM 19 (explained in EP-A-1 107 512 of the applicant), are fed to the TMTS 10, in order to create a model of the MAHN 2 topology. This topology model is composed of information shared by each node (this means that a collective topology view is offered).

This information sharing is obtained by notifications distributed among nodes, either directly (if a physical link between the nodes exists) or indirectly. In the latter case, notifications are relayed through intermediate nodes along the communication path connecting any given pair of nodes, by using ad-hoc routing mechanisms, as provided by the QRM 20 (explained in EP-A-1 107 512 of the applicant).

As soon as a node joins a MAHN, all the other nodes create each a RCTS 11, populated with the content of the PTS 9 of the newly discovered peer. The newly joined node, on the other hand, creates a RCTS 11 for each MAHN node.

Each RCTS 11 is named according to the corresponding remote node. Every time a node updates its PTS 9 (adds/removes a reservation), all the MAHN nodes are notified accordingly, so that each of them can update the RCTS 11 corresponding to said node.

This information sharing is obtained by notifications distributed among nodes, either directly (if a physical link between the nodes exists) or indirectly. In the latter case, notifications are relayed through intermediate nodes along the communication path connecting to a given pair of nodes, by using ad-hoc routing mechanisms, as provided by the QRM 20.

Every time a node leaves a given MAHN, the remaining MAHN nodes remove each the RCTS 11 corresponding to the no-longer visible peer.

The creation and removal of RCTS is actually directed by the TMTS. The model can in fact indicate that, even though the affected node has lost links with some MAHN nodes, it may still be visible through some form of indirect link. Should this happen, the current VTS would still be maintained, but the VTS updates would be redirected from the (broken) direct link to the indirect link. To this extent, the QRM 20 is used for implementing the redirection mechanism.

### 3.3 Shared-Resource Reservation Strategies

Figure 1 shows the aforementioned nodes as mobile (computing) devices 1, 3 and resources 3, 6, 8, all logically connected to a Virtual Tuple Space (VTS) 4. The VTS is the logical union (via the RCTS 11 concept) of the PTS' 9 of each mobile device/resource.

Resources 6 not equipped with a VRSM unit 13 can still be used, provided that a VRSM-equipped device (eventually mobile) 7 is permanently or ad-hoc configured to act as a proxy for the given resource. The proxy device shall maintain reservation information concerning the shared resource it is serving, in its own PTS 23. Please note that this proxy solution can be applied also to those mobile devices 3 that share also their own resources with other mobile devices.

Should such a proxy device 7 not be available for a given shared resource 6, the VTS 4 concept could still apply, provided that:
a. the resource uses some form or mutually exclusive, *queuing* access control; e.g. by using a register-based resource, where the register is an information placeholder that can be atomically tested and set (if not already set by somebody else), as a primitive form of mutually exclusive reservation mechanism.
b. the mobile device that has reserved the resource saves this information in its PTS 23. This information is then automatically reflected to all the other mobile nodes by using the RCTS 25 concept.

This access control mechanism can be accessed in a uniform way, provided that the shared resource 8 offers a (possibly downloadable) proxy TSM 22 to prospective users. This proxy (e.g. Java code) would implement the TSM 21 API (explained in EP-A-1 107 512 of the applicant) as mandated by the hereby-described method for manipulating such kind of resources.

This proxy simply intercepts TSM 21 API primitives and consequently interacts with the resource via a resource's specific message-based reservation protocol (e.g. a Tuple Space "take" operation would be translated in a message sent to the shared resource, which access e.g. a Test-And-Set mechanism).

Following the aforementioned VTS concept, a RCTS 11 representing the resource is created on the prospective user device, in order to maintain information (shared with other users) about reservations (e.g. a distributed semaphore with queue). Please note that the resource 8 does not have any knowledge of VTS 4, and therefore the reservation information concerning that resource is replicated on every node.

As a result, the prospective user gets the illusion of using the PTS 9 for said VRSM-unaware shared resource 8, in a similar fashion as with the case of VRSM-aware shared-resources 3.

Therefore the VRSM method can be successfully exploited in the following cases:
1. with VRSM-aware shared resources 1, 3
2. with VRSM-unaware shared resources, provided that one of the following conditions apply:
   2.1. resource 6 served by a VRSM-aware device 7, which therefore acts as a proxy
   2.2. register-based, queuing resource 8 with proxy TSM 22 made available to prospective users 1, 3

Other than in these cases, the VRSM cannot guarantee the mutually exclusive use of shared resources. Actually there is still a possibility to address also non register-based VRSM-unaware shared resources. For more details, please see § 3.6.1.1.

Please note that a node 3 hosting a shared-resource could actually host a multiplicity of shared-resources, theoretically each of different types 3, 6, 8. It is reasonable, though, to assume that such nodes will host only shared-resources of one given type. At most, a combination of case (1) and case (2.1) can take place, i.e. a set of VRSM-aware shared-resources 3 together with a set of proxies 7 for VRSM-unaware shared-resources 6.

In any case, each resource shall be logically assigned a PTS 9 each. Alternatively, as a design option, one may merge multiple PTS' 9 together in a single PTS 9, which then needs to identify its tuples with an additional tuple field, namely the resource name.

Finally, as aforementioned, a shared-resource 3 can also act as a user of another shared-resource 3, 6, 8. Again, either one maintains a PTS 9 for the user and one for the shared-resource(s) roles, or merge them together, as described above.

### 3.4 Functional Decomposition

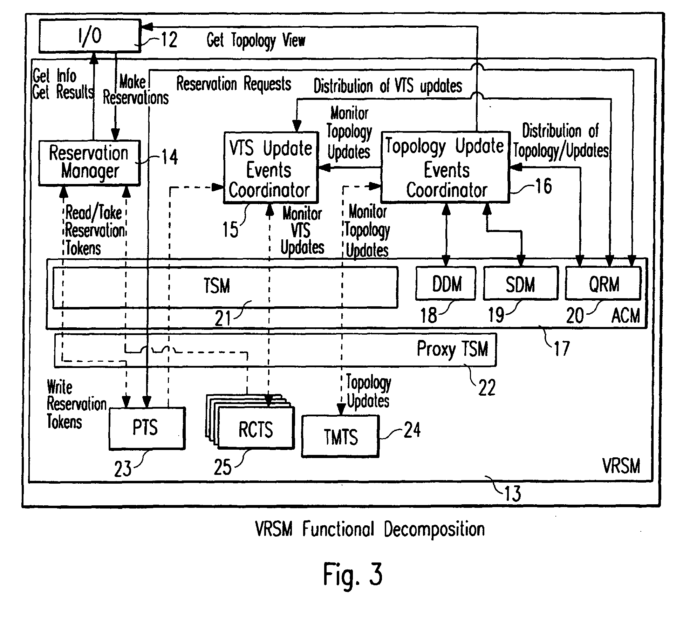

The VRSM 13 software unit, depicted in Figure 3, implements the VRS method. Table 4-1 lists the components the VRSM is composed of.

**Table 4-1 List of units and sub-units**

| ***Unit Name*** | ***Description*** | | |
|---|---|---|---|
| I/O 12 | Any unit accessing the services of the VRSM 13. More specifically, the I/O unit 12 can be either a GUI or another SW program. The interface between the VSRM and I/O unit 12 is basically composed of: | | |
| | a. | a primitive for retrieving a view of the topology model; | |
| | b. | a primitive for registering with the VSRM 13 so as to get notifications about any topology update; | |
| | c. | a primitive for requesting a reservation for a given shared resource; | |
| | d. | a primitive for returning reservation status information about a given shared resource or about a set of shared resources. | |
| VRSM 13 | This unit provides the implementation of the VRSM method on a given MAHN node. This unit is composed of a set of sub units: | | |

| | ***Sub-unit Name*** | | ***Description*** |
|---|---|---|---|
| | Reservation Manager 14 | | Performs reservations by operating on its PTS 23 and on the RCTS' 25 corresponding to the given shared-resources. Should one shared resource not be a VRSM-aware device, the reservation can still be carried out, provided that a Proxy TSM 22, specific for the given resource, is used. |
| | VTS Update Events Coordinator 15 | Registers with the Topology Update Events Coordinator 16 for being notified about topology changes. | |
| | | Registers with the PTS 23 and RCTS' 25 through the TSM 21, for being notified about changes in said spaces (i.e. VTS 4 changes). | |
| | | Coordinates the replication of RCTS content on every MAHN node by: | |
| | | a. | distributing update events through the QRM 20 (eventually relaying events to other nodes not directly connected with the event source); |
| | | b. | monitoring update events coming from other nodes; |
| | | c. | updating any RCTS 25 affected by any update event received; |
| | | d. | monitoring PTS 23 updates, and notifying this to all MAHN nodes through the QRM 20. |
| | Topology Update Events Coordinator 16 | Registers with the SDM 19, DDM 18, and QRM 20 for being notified about topology changes. | |
| | | Concentrates events from SDM 19, DDM 18, and QRM 20 in order to track topology changes, and consequently create or destroy RCTS' 25. | |
| | | This unit stores the topology model in the TMTS 24, distributes topology change events to peers via the QRM 20. This unit tries to maintain the RCTS' 25 of nodes no longer *directly* connected to the given one, by querying the peer unit on the unreachable nodes by means of ad-hoc routing mechanisms enforced by the QRM 20. | |
| | ACM 17 | Ad-Hoc Computing Manager unit described in EP-A-1 107 512 of the applicant. This unit comprises, (among others) of the following sub-units: | |

| | | ***Sub-Unit Name*** | ***Description*** |
|---|---|---|---|
| | | DDM 18 | Device Discovery Manger unit described in EP-A-1 107 512 of the applicant. |
| | | SDM 19 | Service Discovery Manager unit described in EP-A-1 107 512 of the applicant. |
| | | QRM 20 | QoS-based Routing Manager unit described in EP-A-1 107 512 of the applicant. |
| | | TSM 21 | Tuple Space Manager unit described in EP-A-1 107 512 of the applicant. |
| | Proxy TSM 22 | Registers with the Topology Update Events Coordinator 16 for being notified about topology changes. | |
| | | Monitors the PTS 23 and RCTS' 25, for being notified about changes in said spaces (i.e. VTS 4 changes). | |
| | | Intercepts TSM 21 primitives and accordingly manages VTS updates, in cooperation with the resource's 8 mutually exclusive, queuing access control mechanism, and (ii) with the Proxy TSM of other users. | |
| | PTS 23 | This is the tuple space been managed by the given node, for storing reservation tickets 33 and (temporarily) the Ticket Dispenser 34 and Service Number 35 tuples. | |
| | TMTS 24 | This is the tuple space holding information concerning the topology model, as detected through the use of DDM 18 and SDM 19, and by exchanging topology update events among MAHN nodes. | |
| | RCTS 25 | This is a copy of the PTS 23 of another MAHN node, used to implement the notion of VTS 4. | |

### 3.5 Distributed Reservation Mechanism

One possible reservation mechanism that can be used for implementing the VRSM 13, is a VTS-based extension of the concept of *Tuple Space-based distributed queue*. This algorithm is quite simple way of addressing contention and starvation problems.

Each user 1 wishing to reserve a given VRSM-aware shared-resource 3 shall first of all get a reservation ticket 33 from the resource. To this extent, the resource owns a Ticket Dispenser tuple 34 .
1. Each prospective user 26 shall try to take the Ticket Dispenser tuple 34 out of the resource's PTS 30, copy it on its own PTS 29, and extract a ticket 33 (which indicates a service number) from the Ticket Dispenser. Once gotten the ticket, the prospective user increments of one unit the sequence number of the Ticket Dispenser, and moves the Ticket Dispenser tuple from the its PTS 29 to the resource's PTS 30.
   Any other prospective user 27 competing concurrently for acquiring the given resource's Ticket Dispenser 34 will be blocked until the user 26 currently holding the Ticket Dispenser has released it. This synchronization feature is provided by the resource's PTS 30 itself.
   Provisions are made to grant the Ticket Dispenser 34 ownership on a leased basis. For more details about lease, please refer to § 3.9.
2. Once a user has got a ticket 33, it waits for its turn, by trying to take the resource's Service Number tuple 35 from the resource's PTS 30, under the condition that the sequence number contained by such tuple matches with the service number contained in the user's ticket tuple. Each user may eventually draw as many tickets as it wishes, and thus try to take concurrently the Service Number tuple for each drawn ticket (matching the ticket's service number).
3. Once a user has successfully taken the Service Number ticket 35, the user has finally been granted the right to use exclusively the resource. This right is leased: to prolong the reservation lifetime, said user shall renew the lease before this expires. Please see § 3.9 for more details about leases.
4. Once the given user 26 is done with the resource, the user removes the consumed ticket 33 from its own PTS, and increments of one unit the sequential number contained in the Service Number tuple 35. Then the user 26 returns such tuple to the resource's PTS 30, thus unblocking the next user 27 waiting in the resource's PTS queue.

Based on the VTS concept 4, the resource's and user's PTS' 29, 30 are replicated on every node, as RCTS' 31, 32, 33. This is necessary, since we are dealing with a MAHN, where the topology structure is unmanaged and subject to sudden dramatic changes. To this extent, each MAHN node communicates any of the aforementioned events to the other MAHN nodes. The latter update the RCTS' 31, 32 corresponding to the nodes that are signaling the events.

The overall above described algorithm is carried out by the Reservation Manager unit 14, in cooperation with the VTS Update Events Coordinator unit 15, which is in charge of enforcing VTS synchronization among the MAHN nodes, and the QRM 20. The latter is in charge of propagating reservation requests from users to resources and the results (i.e. the Ticket Dispenser tuple 34, the Service Number tuple 35) vice versa.

As an implementation example, each node shall ensure that accesses to any of the aforementioned tuple spaces are mapped to a thread of control each, in order to enforce coordination among competing nodes.

### 3.5.1 MAHN Partitions

As aforementioned, should a MAHN 2 be partitioned due to a topological change, the corresponding VTS 4 would break into multiple VTS fragments, where each fragment uniquely corresponds to a given fragment of the original MAHN.

To this extent, with respect to a given resource, three possible cases can take place:
1. the resource belongs to a MAHN fragment other than those fragments where its users are located
2. the resource belongs to a MAHN fragment where only a subset of its users is located. Two possible sub-cases are:
   2.1. the user, owning the resource at the time the MAHN partition occurred, belongs to the MAHN fragment where the resource is located
   2.2. the user, owning the resource at the time the MAHN partition occurred, does not belong to the MAHN fragment where the resource is located
3. the user, owning the resource's Ticket Dispenser tuple at the time the MAHN partition occurred, does not belong to the MAHN fragment where the resource is located

The VRSM method always checks whether the case 3 applies, irrespective of whether case 1, case 2.1, or case 2.2 applies as well.

Following are the strategies the VRSM method employs for each of these cases.
**Case 1:** each user 26, 27 will simply drop the RCTS 31 associated with the resource, and remove from its own PTS 29 any ticket 33, Service Number 34, and Ticket Dispenser 35 tuples relative to the given resource.
   Correspondingly, the resource shall consider itself no longer booked: to this extent, the resource 28 shall retrieve any Ticket Dispenser 34 and Service Number 35 tuples from any of the RCTS' 31a, 32a corresponding to its former users 26, 27, and finally drop said RCTS'.
   The resource saves any Ticket Dispenser 34 and Service Number 35 tuples so retrieved, in its own PTS 30, and resets the sequence numbers associated with said tuples.
**Case 2.1:** the MAHN fragment grouping both the resource 28 and the user that *owns* the resource, shall operate as before the partition took place, except for the fact that the RCTS' 31, 32, 33 corresponding to the nodes belonging to other MAHN fragments are marked as *deprecated*.
   This means that said RCTS' will be later dropped. Before the dropping operation takes place, in fact, each user belonging to the MAHN fragment where the resource is located, shall maintain the deprecated RCTS' to ensure that the sequence number of the resource's Service Number 35 tuple is incremented correctly.
   That is, the increment operation is carried out in such a way that any ticket tuple 33 belonging to deprecated-RCTS' is skipped. On the other hand, the users belonging to the other fragments simply drop the RCTS' corresponding to the nodes of the resource's MAHN fragment, and remove from their PTS' 29 any ticket relative to said resource.
   The users belonging to the resource's MAHN fragment, and the resource itself, shall drop deprecated RCTS' 31/32/33/31a/32a as soon as the tickets 33 contained in such RCTS' have been taken into account in the recovery process.
**Case 2.2**:The shared-resource 3 deprecates the RCTS' 25 of the nodes belonging to the other MAHN fragments. The resource then searches in any of the deprecated RCTS' the copy of the Service Number 35 tuple, which was owned by the user that had booked the resource, at the time the MAHN partition occurred.
   Once retrieved this tuple, the resource increments the sequence number of this tuple, eventually skipping any sequence number associated with the ticket tuples contained in any of the deprecated RCTS, and finally puts back the Service Number 35 tuple to the resource's own PTS 30. This triggers the awakening of the next prospective user trying to reserve the resource. Therefore, the copy of the Service Number 35 tuple that was maintained in one of the deprecated RCTS' 31a, 32a, is used for recovering the original tuple.
   On the other hand, the user originally owning the resource signals to the I/O unit 12 that the resource is no longer available, removes from its PTS 29 any ticket 33 and Service Number 35 tuples related to said resource, and drops the resource's RCTS 31.
   The users belonging to the other fragments simply drop the RCTS' corresponding to the nodes of the resource's MAHN fragment, and remove from their PTS' 29 any ticket 33 relative to said resource.
   The users belonging to the resource's MAHN fragment, and the resource itself, shall drop deprecated RCTS' 31/32/33/31a/32a as soon as the tickets 33 contained in such RCTS' have been taken into account by the recovery process. This dropping process shall not initiate should case (3) apply: in such a case, the VRSM strategy for case (3) must first run to completion.
**Case 3:** similarly to case (2.2), the copy of the Ticket Dispenser 34 tuple is retrieved by the resource from one of the deprecated RCTS' 31a, 32a. Consequently, the sequence number of this tuple is incremented, eventually skipping any sequence number associated with the ticket 33 tuples contained in any of the deprecated RCTS. The VRSM method can safely perform this increment operation, since any increment made by the original user owning the Ticket Dispenser will in this case not be committed to the resource's PTS 30.
   Finally the resource puts back the Ticket Dispenser 34 tuple to the resource's own PTS 30. This triggers the awakening of the next prospective user trying to get a ticket. Therefore, the copy of the Ticket Dispenser 34 tuple that was maintained in one of the deprecated RCTS 31a, 32a, is used for recovering the original tuple.
   On the other hand, the user originally owning the resource removes from its PTS 29 any ticket 33 and Ticket Dispenser 34 tuples related to said resource, and drops the resource's RCTS 31.
   The users belonging to the other fragments simply drop the RCTS' corresponding to the nodes of the resource's MAHN fragment, and remove from their PTS' 29 any ticket 33 tuple relative to said resource.
   The users belonging to the resource's MAHN fragment, and the resource itself, shall drop deprecated RCTS' 31/32/33/31a/32a as soon as the tickets contained in such RCTS' have been taken into account by the recovery process.

### 3.5.2 MAHN Rejoining

Since topology changes can be *intermittent*, the aforementioned MAHN partition recovery mechanisms shall take into account proper timing dependencies.

That is the users shall not immediately drop their ticket 33 tuples and RCTS' 31/32/33/31a/32a, until a certain amount of time (*Timeout A*) has elapsed. This prevents such users from compromising their activity in cases of intermittent topology changes.

Only topology changes that prove to be stable over said period of time will trigger the clean-up procedures set forth above.

This rationale includes also users owning the resource: the resource won't be given up until said guard timeout expires. Therefore the aforementioned *grace* period applies not only to tickets 33 but also to the Ticket Dispenser 34 and Service Number 35 tuples. However, one must consider that during such a grace period, the user experiences a black out, that is the user is not able to communicate with the resource, even if the user owns the resource reservation.

This means that the recovery actions described above are triggered only at the expiration of said time. This means also that during the normal operations, the MAHN peers synchronize themselves with a common time base. The latter requirement is either provided by the underlying networking technology, or by means of an explicit mechanism put in place.

Should some or all of the MAHN fragments re-join together, a *consistency check* shall be carried out.

First of all, each node of the re-aggregated MAHN will have its Topology Update Events Coordinator Unit 16 notifying topology update events to the VTS Update Events Coordinator Unit 15. These events are then used for verifying whether some tickets 33 owned by the formerly disconnected users are still valid (i.e. whether their sequence numbers have not yet been skipped by the algorithm described above for the case of MAHN partitions).

More precisely, the users rejoining the resource's MAHN will send VTS update events to the resource and to all the other MAHN nodes, re-indicating their own tickets 33. In reply, the resource shall notify the users rejoining the resource's MAHN, which tickets 33 have been skipped during the *blackout* period. The users rejoining the resource's MAHN shall then discard correspondingly such *deprecated* tickets. It is up to the I/O unit 12 whether and how to reallocate old and new tickets in such a manner as to maintain an application specific reservation order scheme.

Accordingly, the given resource and the resource's entire users shall remove the deprecated marking from the RCTS of the users rejoining the resource's MAHN.

As a final result, the original MAHN (or part of it) is restored and the VTS 4 content is guaranteed to be consistent.

Should a *resource* re-join a MAHN, the aforementioned process would still apply, except for the fact that ticket status would have been frozen during the *blackout* period. This means that *no* ticket *skipping* would take place whatsoever.

### 3.6 Operations with Proxy TSM

The VRS method described above still applies to the case of register-based VRSM-unaware shared resource 8, provided that said resource makes available a TSM proxy 22 to each prospective users. The resource does not maintain any PTS 30: each user maintains a proxy resource RCTS 41 instead. This RCTS is exactly the same Resource RCTS 31 described in the previous paragraphs. Its *usage* however is slightly different in this case. Therefore this RCTS is thereinafter indicated as *proxy resource RCTS*.

The following paragraphs analyze (i) the normal operations, (ii) the MAHN partition, and (iii) the MAHN re-joining cases.

### 3.6.1 Normal operations

In order to be able to operate properly, the Reservation Manager 14 must have the illusion that it is still operating on the resource's PTS 30 (as described in the previous paragraphs).

This is achieved by having the Proxy TSM 22 cooperating with the resource 8 and the Proxy TSMs of other MAHN nodes, and by maintaining on each user a specific proxy resource RCTS 41 representing the given resource.

The Proxy TSM 22 of the first MAHN node discovering the given resource 8, shall initialize the proxy resource RCTS 41 with a Ticket Dispenser 34 tuple and a Service Number 35 tuple. In order to avoid two nodes from concurrently trying to initialize the proxy resource RCTS 41, the involved Proxy TSMs 22 shall participate in an election process, similar to the one described in § 3.6.1.1. The winner will initialize its local proxy resource RCTS 41 and distribute this information to other nodes. The losers will simple abort the initialization process.

Following the VTS 4 concept, the content of the proxy resource RCTS 41 is maintained consistent across the set of users of the given resource.

As for what the Service Number 35 tuple it concerns, the mutually exclusive, queuing access control mechanism offered by the register-based resource 8 provides the underlying synchronization mechanisms among competing users.

Every time a user tries to get access to the given resource (i.e. whenever a user *tries* to take the Service Number 35 tuple from the resource's PTS 30 via the proxy resource RCTS 41), the Proxy TSM 22 sends first a message to the resource. This message instructs the latter to lock. This is a blocking operation: if another user has already locked the resource, the former user remains waiting for the latter user to unlock the resource. It is up to the resource to determine whom to grant the reservation when the resource, formerly locked, gets unlocked. E.g. a queuing policy could be enforced by the sequence order of messages sent by users' Proxy TSMs 22 to the resource, and queued by the latter.

Once the lock has been acquired, the Proxy TSM 22 of the *winning* user notifies the peer Proxy TSMs of the other users that the winning user is going to take the Service Number 35 tuple. Consequently, the Proxy TSMs of all the other users will remove the copy of said tuple from their own proxy resource RCTS' 41.

Finally, the Proxy TSM 22 of the winning user shall remove the copy of the Service Number 35 tuple from the local proxy resource RCTS 41, and return said tuple to the user's Reservation Manager Unit 14. Said Proxy TSM 22 shall then send an acknowledgement message to the resource indicating that the reservation has been carried out (this is a form of two phase commit protocol - see § 3.6.2 sub-case 2.2). The Reservation Manager Unit 14 then saves the Service Number 35 tuple in the winning user's own PTS 38 (as described in § 3.5).

This resource reservation is leased: to prolong the reservation lifetime, the winning user shall renew the lease before this expires. Please see § 3.9 for more details about leases.

Conversely, whenever a user intends to return the Service Number 35 tuple to the resource (by putting it into the local proxy resource RCTS 41), the Proxy TSM 22 first distributes copies of this tuple to the peer Proxy TSMs 22 of the other users. In such a way, each peer Proxy TSM 22 can put the received copy into the local proxy resource RCTS 41. Finally, the Proxy TSM 22 of the user owning the resource sends a message to the latter, instructing it to unlock.

As for what the Ticket Dispenser 34 tuple it concerns, instead, a more sophisticated synchronization mechanism is required.

Any user can in fact take the Ticket Dispenser 34 at any time, but only one user at a time can actually take it. This means that a user shall take atomically the Ticket Dispenser 34 tuple from its local proxy resource RCTS 41, and consequently instruct the other users to remove the same tuple from their local proxy resource RCTS.

To avoid contention and dead locks, due to concurrent attempts of multiple users to take the Ticket Dispenser 34 tuple, an *election protocol* is hereby proposed to provide atomicity.

### 3.6.1.1 Ticket Dispenser Election Protocol

The Proxy TSM 22 of each contender computes first a time stamp. The Proxy TSM then copies this time stamp as a tuple (containing an identifier of the given node) into the local proxy resource RCTS 41, and distributes copies of this tuple to the other Proxy TSMs.

The Proxy TSMs of the users of a given resource 8 compare any received time stamp tuple with their own, which are stored in their local proxy resource RCTS 41.
- If the time stamps are by any chance equivalent, the given Proxy TSM 22 stores the incoming tuple with a *marking*, indicating the need for a later reattempt (restricted only to the node(s) that generated the colliding time stamp). Then the Proxy TSM 22 waits for other time stamps to arrive within a given period of time (Timeout B).
- If the received time stamp is lesser than the own one, the given Proxy TSM 22 *blocks* the acquisition process of the Ticket Dispenser 34 tuple, waiting to be awaken as soon as the winner user releases such tuple.
- If the received time stamp is greater than the own one, the given Proxy TSM 22 drops the incoming tuple and waits for another time stamp to arrive within a given period of time (Timeout B).

### Upon reception of each time stamp tuple, the Proxy TSM 22 stops its Timeout B.

When the Timeout B expires, the Proxy TSM 22 first checks whether there are any pending local request for acquiring the Ticket Dispenser 34 tuple. If not, the node simply stores information about the elected node (this is the case of a *passive* node whose proxy resource RCTS 41 is simply updated).

Otherwise, in the case of an *active* node (i.e. one of the nodes that actually requested the acquisition of the Ticket Dispenser tuple), the Proxy TSM 22 checks whether there is any *marked* time stamp.

If so, the Proxy TSM 22 removes the marked time stamp from the local proxy resource RCTS, waits for a random time, and then resends a new time stamp only to those active nodes whose time stamps were saved as marked (i.e. the colliding active nodes). This process is undertaken by all the colliding active nodes only, and iterates, until only one node wakes up after Timeout B expiration and discovers that no marked time stamps are there.

From this point on, this node is the one elected to take the Ticket Dispenser 34 tuple. The Proxy TSM 22 of such node takes care of notifying the ratification of the acquisition of such tuple, to the Proxy TSMs 22 of the other nodes, which consequently shall remove the corresponding copy of said tuple from their local proxy resource RCTS 41.

Finally, the Proxy TSM 22 of the winner user returns the Ticket Dispenser 34 tuple to the Reservation Manager Unit 14 of the winner user.

Once the winner user is done with the Ticket Dispenser 34 tuple, the Proxy TSM 22 returns this tuple to the local proxy resource RCTS 41, and notifies the other nodes. This notification unblocks any pending node (i.e. those that initially contended for the Ticket Dispenser 34 tuple acquisition), and the aforementioned process is re-applied, including also any other node that may have just started requesting the Ticket Dispenser 34 tuple acquisition in the meanwhile.

This complex process takes place only for register-based VRSM-unaware shared-resource 8. Therefore this process does not impact on other operations involving VRSM-aware shared-resources 1, 3, 7.

Nevertheless, it is worth noting that a similar election process can be also applied to *non* register-based VRSM-unaware shared-resource, with respect to the Service Number tuple. In such a case, it is then possible to utilize a general Proxy TSM, which is not bound to any specific resource-specific protocol (for locking/unlocking the resource).

Furthermore, as pointed out in § 3.6, the proxy resource RCTS 41 initialization shall be accomplished by employing an election protocol similar to the one described above. The only difference being that in such a case the elected node will have the right to initialize the proxy resource RCTS 41 (i.e. initialize the Ticket Dispenser 34 and the Service Number 35 tuples), so as to start the VRS method from a known initial state.

### 3.6.2 MAHN Partitions

An interesting aspect of the Proxy TSM 22 solution is that, when a partition occurs, the resource 8 does not have any possibility to recover: the resource is totally dependent on its users.
- To this extent, the aforementioned case (1) cannot be addressed with the corresponding strategy described above. The resource may in fact remain blocked, until some human intervention or a MAHN rejoining event takes place.
   To this extent, it is convenient to use only resources that actually *lease* their reservation. Since this is a common approach used in the industry for distributed processing systems, we can safely assume that leased mechanisms are put in place. Therefore, the hereby-presented method will assume that the users shall explicitly renew the leases for the resource reservations they own.
   The Reservation Manager can accomplish this, based on some configured or user provided information, like the renewal period and/or estimated duration of resource usage.
- Let's consider now the case (2) of a resource belonging to a MAHN fragment, where only a subset of its users is located. As aforementioned, this case can be broken down into two possible sub-cases.
   - **Sub-case 2.1:** *the user, owning the resource at the time the MAHN partition occurred, belongs to the MAHN fragment where the resource is located*: same as in the case of VRSM-aware shared-resources.
   - **Sub-case 2.2:** *the user, owning the resource at the time the MAHN partition occurred, does not belong to the MAHN fragment where the resource is located:* since the resource does not have any knowledge about the VTS, the resource cannot recover the Service Number tuple.

   It is up to the users, which remained in the MAHN fragment containing the resource, to try to recover from the partition effects.
   But first of all, as aforementioned, the resource reservation must be leased (otherwise the resource is irremediably locked until the original user that reserved it, finally unblocks the resource). As soon as the lease expires, one of the users waiting for the resource, gets then unblocked.
   As aforementioned, a minimum requirement for the resource's access control mechanism is that this mechanism must employ some form of *queuing* mechanism. This implies that some of the queue entries might become no longer valid at the time the partition occurs.
   In order to avoid the risk of having the resource granting exclusive access to users no longer valid, the message, notifying the reservation grant back to prospective user Proxy TSM 22, must be acknowledged back by the latter to the resource, within a given timeout (Timeout C). Should this timeout expire, the given queue entry would be immediately discarded and the next entry would be examined (and the process reapplied).
   Only with this additional minimum requirement, it is possible to skip the reservation requests of no longer reachable users, and let the resource be finally made available to the other, valid users. For the rest, the same process applies, as described above for the case of VRSM-aware shared-resources, with respect to this given partition sub-case.
- As for what case (3) it concerns *(the user, owning the resource's Ticket Dispenser tuple at the time the MAHN partition occurred, does not belong to the MAHN fragment where the resource is located)*: similarly to case (2.2), the resource cannot recover the Ticket Dispenser 34 tuple.
   It is up to the users that remained in the MAHN fragment containing the resource, to try to recover from the partition effects.
   The VTS Update Events Coordinator unit 15 of each user will recover the Ticket Dispenser 34 tuple from the RCTS corresponding to the (no longer reachable) user that owned such tuple, and place said tuple in the proxy resource RCTS 41.
   Afterwards, each user willing to draw a ticket shall use the Ticket Dispenser 34 tuple election protocol described in § 3.6.1.1.
   However, it must be noted that also such election protocol may be affected by sudden MAHN partitions, insofar as competing users may be distributed over various MAHN fragments before the said protocol runs to completion. Of course, only those users (if any) belonging to the MAHN fragment where the resource is located, will be able to complete the election protocol. All the other users will be excluded from the election protocol: consequently, each node will deprecate the time stamps distributed by the no longer reachable competing nodes.
   For the rest, the same process applies, as described above for the case of VRSM-aware shared-resources 1, 3, 7 with respect to the partition case (3).

### 3.6.3 MAHN Rejoining

The same process applies, as described above for the case of VRSM-aware shared-resources 1, 3, 7. Actually in this case the rejoining users will send VTS update events to all the other MAHN nodes (rather than to the resource), re-indicating their own tickets 33. In reply, the user owning the resource shall indicate to the rejoining users, which tickets 33 have been skipped during the *blackout* period. The rejoining users shall then discard correspondingly such *deprecated* tickets.

It is up to the I/O unit 12 the decision whether and how to reallocate old and new tickets in such manners as to maintain an application-specific reservation order scheme.

Should the user owning the resource 8 be one of the rejoining nodes, the normal operations described in § 3.6.1 would simply be resumed, as long as the blackout period lasted less then the Timeout A.

Otherwise a new resource owner is going to be selected in the meanwhile, as described in the previous paragraph.

Finally, a special treatment is provided of the time stamp tuples (used for electing the Ticket Dispenser 34 tuple owner).

Intermittent MAHN partitions, during more then the Timeout B and/or more than the random timeout (which is used in the case of colliding time stamps resolution), and/or occurring at the time those timers expire, can in fact cause a disruption of the election protocol. Messages related to such protocol and exchanged by competing nodes, in fact, can get lost during the *blackout* period.

### To solve this problem, the Proxy TSMs 22 of each node shall be immediately notified of any MAHN partition occurring.

In this way, each Proxy TSM 22 can *suspend* the election protocol (i.e. suspend any pending random timeout and/or Timeout B), waiting for either a MAHN rejoining event or for the Timeout A to expire.

In the former case, the election protocol can be *resumed* (i.e. resume any pending random timeout and/or Timeout B).

In the latter case the election protocol must instead be reprogrammed, insofar as timestamps corresponding to nodes no longer belonging to the MAHN fragment where the resource is located, shall be dropped. Consequently, the Proxy TSMs 22 of all such, no longer reachable, nodes shall immediately stop to perform the election protocol, and notify to the I/O unit 12 that the ticket draw has failed.

### 3.7 Event distribution mechanism

The distribution of Topology Update Events and VTS Update Events shall be extended to all the MAHN nodes. This process has to be carried out on a hop-by-hop basis: each node will distribute events to its neighbor, and the process iterates.

The QRM 20 abstracts out (at VRSM 13 level) any MAHN-specific routing algorithm.

Attention must be however paid so as to avoid distributed events from being carried over closed loop paths within a given MAHN.

This can be achieved by using any well-known multicast mechanisms, if available. Each MAHN node would be assigned a multicast group, and each other node would then join the group of each discovered peer. The multicast mechanism, beside being not always available, could also be quite complex, since each node should *uniquely* select a (leased) multicast group Id, and maintain it.

Furthermore, the decision whether to propagate update events shall be always taken by the VTS Update Events Coordinator unit 15 and/or Topology Update Events Coordinator unit 16. Since these units have global knowledge of respectively the VTS 4 and the TMTS 10, such units can efficiently decide on a hop-by-hop basis whether to propagate or not to neighbors the incoming update events. The decision whether to propagate such events is taken based on the assumption that redundant information shall not flood the MAHN.

In order to enforce this, however, each update event shall be carried into a message containing some header information, describing the list of MAHN nodes that said message has already visited. The VTS Update Events Coordinator unit 15 and/or Topology Update Events Coordinator unit 16 can use this information for pruning the set of destination nodes. Said units can in fact verify whether the event generated by an event source node is equivalent to the one generated by another event source node (this is the typical case of topology updates, where the same topology change can be observed by many MAHN nodes simultaneously). If this applies, only one of these messages will be propagated to neighbors. Please note that said units 15/16 shall consequently compare each incoming update event with the corresponding tuple space content (respectively the VTS' 4 and the TMTS 10).

Therefore this invention makes provision of respectively a VTS protocol and a TMTS protocol, which enforces the event distribution as set forth above.

### 3.8 Clock Synchronisation

As aforementioned, the VRS method is based on the assumption that the MAHN nodes' clocks are synchronized. This can be achieved either by using specific functionality of the underlying networking technology (e.g. Bluetooth), or explicitly.

In the latter case, an explicit protocol is required for having the nodes exchanging synchronization information among each other.

This invention makes provision of an election protocol similar to the one described in § 3.6.1.1. The protocol is run at the MAHN (spontaneous) creation time by having nodes using unsynchronized clocks.

One of the nodes is elected as *master* node, i.e. as a node provide the synchronization information for the clocks of all the MAHN nodes. To this extent, the elected node acts as a shared resource 3, which periodically sends a synchronization beacon to all the other nodes. The other nodes abort the election protocol as soon as the winner is elected.

The only difference with respect to the case of normal resource 3 is that, as soon as the given master node gets partitioned from a MAHN, said node keeps behaving as the master node in its MAHN fragment. The nodes in the other MAHN fragments, instead, restart the election protocol set forth above, so as to elect a new master node. This applies also to all the other types of election protocols described above.

When two or more MAHN fragments rejoin, all the nodes restart the election protocol set forth above, so as to elect a new master node.

### 3.9 Resource Reservation Lease Management

Any resource granting mutually exclusive access to prospective users, shall enforce a leasing policy, otherwise MAHN partitions and/or node crashes can cause starvation and/or contention problems.

This invention proposes to include a maximum lease time in the Service Number 35 tuple. This information is set by either the resource itself at initialization (and/or reconfiguration) time, or by the Proxy TSM initializing the proxy resource RCTS 41 (see details about the corresponding election process in § 3.6.1.1).

The I/O unit 12 trying to obtain a reservation for a given resource shall always specify the lease duration. The VRSM 13 shall compare this parameter with the resource's one by the time the corresponding Service Number tuple has been acquired.

The actual lease duration shall then be the minimum value between the duration specified by the I/O unit 12 and the resource's one. This information is stored as absolute expiration time in the ticket tuple that is consumed by the user currently owning the resource. This tuple, stored in the resource's PTS 29, is then made available to all the nodes - resource included - via the VTS 4 concept.

As soon as the resource 3 grants the reservation, the resource shall retrieve the lease duration contained in the corresponding ticket from the RCTS 31a, 32a that represents the given user. Once gotten this information, the resource 3 shall start correspondingly a Timeout D, which corresponds to the negotiated lease duration.

Similarly, in the case of VRSM-unaware resources 8 the Proxy TSM of the user owning the resource will enforce itself the lease contract. The Proxy TSMs of the other MAHN nodes shall eventually automatically police the lease on behalf of the user owning the resource, should such user crash or be partitioned from the resource. This mechanism is possible due to the VTS 4 concept, which offers to each node a global view of the Virtual Reservation Space.

Users willing to prolong a resource reservation shall change the absolute expiration time contained in the ticket currently being served, according to the negotiation rules set forth above. This ticket update gets notified to the resource 3 via the VTS abstraction. The resource shall then restart the Timeout D accordingly. In case of VRSM-unaware shared-resources 8, the other nodes will police the lease, based on the new absolute expiration time.

### 4. Example

Network Resource Reservation for achieving End-to-End QoS in MAHN: the VRS method can be applied even for offering an unmanaged, self-healing, spontaneous set of network routers, capable of guaranteeing given levels of Quality of Service (QoS).

In this example, routers can be modeled as resources (3, 6, or 8).

Network resources' (i.e. output links) can be modeled as having their QoS properties (like bandwidth and delay) quantized. Each *quantum* is represented by a tuple in the router's PTS 30, and indicates the minimal amount of QoS (e.g. bandwidth) on a given output link.

A node willing to reserve a path in the MAHN with a given QoS can first try to reserve a router, and then to take as many quanta as required to satisfy the QoS level specified by said node. Once the quanta are taken, said node releases the reservation it owned concerning the router.

Multiple nodes can thus try to get the quanta they need, as long as these are available. The VTS concept offers the possibility to coordinate these attempts in such a way so as to avoid contention and starvation.

Please consider that in this way one can create semi-permanent virtual circuits in a MAHN: the resource reservation can in fact be done not only on a per connection basis, but also on (per node pair), long term basis.

Given that in MAHNs each node typically acts also as a router, the above-mentioned process can be iterated. Data path reservations can thus span across MAHNs.

This solution introduces the QoS quantum concept.

## Claims

1. A method for managing, by means of a virtual reservation space manager (13) located in a communication device for communicating data in an unmanaged communication network, reservations of shared resources in said communication network on the basis of reservation information distributed among other devices of the network wherein said virtual reservation space manager (13) comprises a private tuple space (23) associated with the communication device, said private tuple space (23) comprising information about reservations of resources,
**characterized by,**
replicating the private tuple spaces of all other devices of the network in said virtual reservation space manager (13), whereby said private tuple space (23), together with corresponding replicates (25) of private tuple spaces of said other devices in said communication network, forms an overall virtual tuple space for coordinating the reservation of shared resources in said network.

2. A method according to claim 1,
**characterized in,**
**that** said private tuple spaces (23, 25) are updated upon the occurrence of any changes in or in respect to their content.

3. A method according to claim 1 or 2,
**characterized in,**
**that** said virtual reservation space manager (13) reserves a resource comprising a private tuple space by moving a reservation token from the private tuple space of the resource to its own private tuple space.

4. A method according to claim 3,
**characterized in,**
**that** said virtual reservation space manager (13) copies a ticket dispenser tuple from a private tuple space of a resource to be reserved, extracts a ticket indicating a service number, increments a sequence number of the ticket dispenser tuple, and moves the ticket dispenser tuple back to the private tuple space of the resource, whereby the resource is accessed when the virtual reservation space manager succeeds in taking the service number tuple from the private tuple space of the resource, upon successful matching of the previously extracted service number, with the current service number contained in said tuple.

5. A method according to claim 4,
**characterized in,**
**that** said virtual reservation space manager (13), when said resource is disconnected from the communication device, drops any ticket dispenser tuple, ticket, service number tuple and/or service number relating to said resource from the virtual reservation space manager.

6. A method according to claim 4 or 5,
**characterized in,**
**that** said virtual reservation space manager (13), when other devices of said network are disconnected but said resource is not disconnected from the communication device, marks the replicates of the private tuple spaces relating to the disconnected devices as deprecated and drops them later while ensuring that the sequence number of said resource is incremented correctly.

7. A method according to claim 5 or 6,
**characterized in,**
**that** said virtual reservation space manager (13) drops any of said tuples or reservation information only after expiration of a predetermined grace period.

8. A method according to one of the claims 3 to 7,
**characterized in,**
**that** the reservation and the access of said resource comprising a private tuple space is based on predetermined leasing time periods.

9. A method according to claim 1 or 2,
**characterized in,**
**that** said virtual reservation space manager (13) reserves a resource not comprising a private tuple space by moving a reservation token from a proxy tuple space to its own private tuple space, whereby said proxy tuple space is a local copy of the resource's fictitious personal tuple space, said proxy tuple space serving as the distributed private tuple space of said resource.

10. A method according to claim 9,
**characterized in,**
**that** said virtual reservation space manager (13) initializes a resource not comprising a private tuple space by creating and storing a reservation token for the resource in said proxy tuple space.

11. A method according to claim 9 or 10,
**characterized in,**
**that** said virtual reservation space manager (13) copies a ticket dispenser tuple from said proxy tuple space of said resource to be reserved, extracts a ticket indicating a service number, increments a sequence number of the ticket dispenser tuple, and moves the ticket dispenser tuple back to said proxy tuple space of the resource, whereby the resource is accessed when the virtual reservation space manager succeeds in taking the service number tuple from said proxy tuple space of the resource, upon successful matching of the previously extracted service number, with the current service number contained in said tuple.

12. A method according to claim 11,
**characterized in,**
**that** said virtual reservation space manager (13), when said resource is disconnected from the communication device, drops any ticket dispenser tuple, ticket, service number tuple and/or service number relating to said resource from the virtual reservation space manager.

13. A method according to one of the claims 11 to 12,
**characterized in,**
**that** said virtual reservation space manager (13), when other devices of said network are disconnected but said resource is not disconnected from the communication device, marks the replicates of the private tuple spaces relating to the disconnected devices as deprecated and drops them later while ensuring that the sequence number of said resource is incremented correctly.

14. A method according to claim 12 or 13,
**characterized in,**
**that** said virtual reservation space manager (13) drops any of said tuples or reservation information only after expiration of a predetermined grace period.

15. A method according to one of the claims 9 to 14,
**characterized in,**
**that** the reservation and the access of said resource not comprising a private tuple space is based on predetermined leasing time periods.

16. A method according to one of the claims 1 to 15,
**characterized by**
synchronization means for generating and providing synchronization information for other devices and resources in the network.

17. A method for cooperation with a method according to any one of the claims 1 to 16 for managing, by means of a virtual reservation space manager (13) located in a resource device (3) for providing a functionality for other devices in an unmanaged communication network, reservations of the resource in said communication network on the basis of reservation information distributed among the other devices of the network wherein said virtual reservation space manager (13) comprises a private tuple space associated with the resource device, said private tuple space comprising information about reservations of the resource,
**characterized by,**
replicating the private tuple spaces of all other devices of the network in said virtual reservation space manager (13), whereby said private tuple space, together with corresponding replicates of private tuple spaces of said other devices in said communication network, forms an overall virtual tuple space for coordinating the reservation of the resource in said network.

18. A method according to claim 17,
**characterized in,**
**that** said private tuple spaces are updated upon the occurrence of any changes in or in respect to their content.

19. A method according to claim 17 or 18,
**characterized in,**
**that** said virtual reservation space manager (13) reserves the resource for a device by moving a reservation token from the private tuple space of the resource to a private tuple space of the device.

20. A method according to claim 19,
**characterized in,**
**that** the reservation token comprises a ticket dispenser tuple from which a ticket indicating a service number can be extracted by a device, whereafter a sequence number of the ticket dispenser tuple is incremented and the ticket dispenser tuple is moved back to the private tuple space of the resource, whereby the resource is accessed when the virtual reservation space manager succeeds in taking the service number tuple from the private tuple space of the resource, upon successful matching of the previously extracted service number, with the current service number contained in said tuple.

21. A method according to claim 20,
**characterized in,**
**that** said virtual reservation space manager (13), when said resource is disconnected from a device, retrieves any ticket dispenser tuple and service number tuple from the replicate of the private tuple space of the device back to its own private tuple space and drops the replicate of the private tuple space of the device thereafter.

22. A method according to claim 20 or 21,
**characterized in,**
**that** said virtual reservation space manager (13), when said resource is disconnected from some other devices of said network but not from all devices, said reservation manager marks the replicates of the private tuple spaces relating to the disconnected devices as deprecated and drops them later while ensuring that the sequence number of the resource is incremented correctly.

23. A method according to claim 21 or 22,
**characterized in,**
**that** said virtual reservation space manager (13) drops any of said tuples or reservation information only after expiration of a predetermined grace period.

24. A method according to one of the claims 17 to 24,
**characterized by**
synchronization means for generating and providing synchronization information for other devices and resources in the network.

25. A computer software product comprising program information that, when executed by a program execution device, executes the method according to any one of the claims 1 to 16.

26. A computer software product comprising program information that, when executed by a program execution device, executes the method according to any one of the claims 17 to 24.

## Patentansprüche

1. Verfahren zum Verwalten, mittels eines in einer Kommunikationsvorrichtung zum Kommunizieren von Daten in einem unverwalteten Kommunikationsnetz befindlichen Verwalters (13) eines virtuellen Reservierungsraums, von Reservierungen gemeinsam verwendeter Ressourcen in dem Kommunikationsnetz auf der Basis von Reservierungsinformationen, die zwischen anderen Vorrichtungen des Netzes verteilt werden, wobei der Verwalter (13) eines virtuellen Reservierungsraums einen privaten Tupelraum (23) aufweist, der der Kommunikationsvorrichtung zugeordnet ist, wobei der private Tupelraum (23) Informationen über Reservierungen von Ressourcen aufweist,
**gekennzeichnet durch**
Reproduzieren der privaten Tupelräume aller anderen Vorrichtungen des Netzes in dem Verwalter (13) eines virtuellen Reservierungsraums, wodurch der private Tupelraum (23), zusammen mit entsprechenden Reproduktionen (25) von privaten Tupelräumen der anderen Vorrichtungen in dem Kommunikationsnetz, einen virtuellen Gesamt-Tupelraum zum Koordinieren der Reservierung von gemeinsam verwendeten Ressourcen in dem Netz bildet.

2. Verfahren nach Anspruch 1,
**dadurch gekennzeichnet,**
**dass** die privaten Tupelräume (23, 25) nach dem Auftreten von Änderungen in oder hinsichtlich deren Inhalt aktualisiert werden.

3. Verfahren nach Anspruch 1 oder 2,
**dadurch gekennzeichnet,**
**dass** der Verwalter (13) eines virtuellen Reservierungsraums eine Ressource, die einen privaten Tupelraum aufweist, durch Bewegen eines Reservierungs-Tokens von dem privaten Tupelraum der Ressource zu seinem eigenen privaten Tupelraum reserviert.

4. Verfahren nach Anspruch 3,
**dadurch gekennzeichnet,**
**dass** der Verwalter (13) eines virtuellen Reservierungsraums ein Ticket-Spender-Tupel aus einem privaten Tupelraum einer zu reservierenden Ressource kopiert, ein Ticket, das eine Dienstnummer anzeigt, entnimmt, eine Laufnummer des Ticket-Spender-Tupels inkrementiert und das Ticket-Spender-Tupel zurück zu dem privaten Tupelraum der Ressource bewegt, wodurch auf die Ressource zugegriffen wird, wenn der Verwalter eines virtuellen Reservierungsraums dahingehend erfolgreich ist, nach einem erfolgreichen Übereinstimmen der vorher entnommenen Dienstnummer mit der aktuellen Dienstnummer, die in dem Tupel enthalten ist, das Dienstnummerntupel aus dem privaten Tupelraum der Ressource zu nehmen.

5. Verfahren nach Anspruch 4,
**dadurch gekennzeichnet,**
**dass** der Verwalter (13) eines virtuellen Reservierungsraums, wenn die Ressource von der Kommunikationsvorrichtung getrennt wird, ein Ticket-Spender-Tupel, ein Ticket, ein Dienstnummerntupel und/oder eine Dienstnummer, das/die sich auf die Ressource bezieht, aus dem Verwalter eines virtuellen Reservierungsraums abwirft.

6. Verfahren nach Anspruch 4 oder 5,
**dadurch gekennzeichnet,**
**dass** der Verwalter (13) eines virtuellen Reservierungsraums, wenn andere Vorrichtungen des Netzes getrennt werden, die Ressource jedoch nicht von der Kommunikationsvorrichtung getrennt wird, die Reproduktionen der privaten Tupelräume, die sich auf die getrennten Vorrichtungen beziehen, als herabgesetzt markiert und diese später abwirft, während sichergestellt wird, dass die Laufnummer der Ressource korrekt inkrementiert wird.

7. Verfahren nach Anspruch 5 oder 6,
**dadurch gekennzeichnet,**
**dass** der Verwalter (13) eines virtuellen Reservierungsraums eines der Tupel oder eine der Reservierungsinformationen lediglich nach dem Ablauf einer vorbestimmten Aufschubdauer abwirft.

8. Verfahren nach einem der Ansprüche 3 bis 7,
**dadurch gekennzeichnet,**
**dass** die Reservierung und der Zugriff auf die Ressource, die einen privaten Tupelraum aufweist, auf vorbestimmten Mietzeitdauern basieren.

9. Verfahren nach Anspruch 1 oder 2,
**dadurch gekennzeichnet,**
**dass** der Verwalter (13) eines virtuellen Reservierungsraums eine Ressource, die keinen privaten Tupelraum aufweist, durch Bewegen eines Reservierungs-Tokens von einem Vertretungs-Tupelraum zu seinem eigenen privaten Tupelraum reserviert, wodurch der Vertretungs-Tupelraum eine lokale Kopie des fiktiven persönlichen Tupelraums der Ressource ist, wobei der Vertretungs-Tupelraum als der verteilte private Tupelraum der Ressource dient.

10. Verfahren nach Anspruch 9,
**dadurch gekennzeichnet,**
**dass** der Verwalter (13) eines virtuellen Reservierungsraums eine Ressource, die keinen privaten Tupelraum aufweist, durch Erzeugen und Speichern eines Reservierungs-Tokens für die Ressource in dem Vertretungs-Tupelraum initialisiert.

11. Verfahren nach Anspruch 9 oder 10,
**dadurch gekennzeichnet,**
**dass** der Verwalter (13) eines virtuellen Reservierungsraums ein Ticket-Spender-Tupel aus dem Vertretungs-Tupelraum der zu reservierenden Ressource kopiert, ein Ticket, das eine Dienstnummer anzeigt, entnimmt, eine Laufnummer des Ticket-Spender-Tupels inkrementiert und das Ticket-Spender-Tupel zurück zu dem Vertretungs-Tupelraum der Ressource bewegt, wodurch auf die Ressource zugegriffen wird, wenn der Verwalter eines virtuellen Reservierungsraums dahingehend erfolgreich ist, nach einem erfolgreichen Übereinstimmen der vorher entnommenen Dienstnummer mit der aktuellen Dienstnummer, die in dem Tupel enthalten ist, das Dienstnummerntupel aus dem Vertretungs-Tupelraum der Ressource zu nehmen.

12. Verfahren nach Anspruch 11,
**dadurch gekennzeichnet,**
**dass** der Verwalter (13) eines virtuellen Reservierungsraums, wenn die Ressource von der Kommunikationsvorrichtung getrennt wird, ein Ticket-Spender-Tupel, ein Ticket, ein Dienstnummerntupel und/oder eine Dienstnummer, das/die sich auf die Ressource bezieht, aus dem Verwalter eines virtuellen Reservierungsraums abwirft.

13. Verfahren nach einem der Ansprüche 11 bis 12,
**dadurch gekennzeichnet,**
**dass** der Verwalter (13) eines virtuellen Reservierungsraums, wenn andere Vorrichtungen des Netzes getrennt werden, die Ressource jedoch nicht von der Kommunikationsvorrichtung getrennt wird, die Reproduktionen der privaten Tupelräume, die sich auf die getrennten Vorrichtungen beziehen, als herabgesetzt markiert und diese später abwirft, während sichergestellt wird, dass die Laufnummer der Ressource korrekt inkrementiert wird.

14. Verfahren nach Anspruch 12 oder 13,
**dadurch gekennzeichnet,**
**dass** der Verwalter (13) eines virtuellen Reservierungsraums eines der Tupel oder eine der Reservierungsinformationen lediglich nach dem Ablauf einer vorbestimmten Aufschubdauer abwirft.

15. Verfahren nach einem der Ansprüche 9 bis 14,
**dadurch gekennzeichnet,**
**dass** die Reservierung und der Zugriff auf die Ressource, die keinen privaten Tupelraum aufweist, auf vorbestimmten Mietzeitdauern basieren.

16. Verfahren nach einem der Ansprüche 1 bis 15,
**gekennzeichnet durch**
eine Synchronisationseinrichtung zum Erzeugen und Liefern von Synchronisationsinformationen für andere Vorrichtungen und Ressourcen in dem Netz.

17. Verfahren für eine Zusammenarbeit mit einem Verfahren gemäß einem der Ansprüche 1 bis 16 zum Verwalten, mittels eines in einer Ressourcenvorrichtung (3) zum Liefern einer Funktionalität für andere Vorrichtungen in einem unverwalteten Kommunikationsnetz befindlichen Verwalters (13) eines virtuellen Reservierungsraums, von Reservierungen der Ressource in dem Kommunikationsnetz auf der Basis von Reservierungsinformationen, die zwischen den anderen Vorrichtungen des Netzes verteilt werden, wobei der Verwalter (13) eines virtuellen Reservierungsraums einen privaten Tupelraum aufweist, der der Ressourcenvorrichtung zugeordnet ist, wobei der private Tupelraum Informationen über Reservierungen der Ressource aufweist,
**gekennzeichnet durch**
Reproduzieren der privaten Tupelräume aller anderen Vorrichtungen des Netzes in dem Verwalter (13) eines virtuellen Reservierungsraums, wodurch der private Tupelraum, zusammen mit entsprechenden Reproduktionen von privaten Tupelräumen der anderen Vorrichtungen in dem Kommunikationsnetz, einen virtuellen Gesamt-Tupelraum zum Koordinieren der Reservierung der Ressource in dem Netz bildet.

18. Verfahren nach Anspruch 17,
**dadurch gekennzeichnet,**
**dass** die privaten Tupelräume nach dem Auftreten von Änderungen in oder hinsichtlich deren Inhalt aktualisiert werden.

19. Verfahren nach Anspruch 17 oder 18,
**dadurch gekennzeichnet,**
**dass** der Verwalter (13) eines virtuellen Reservierungsraums die Ressource für eine Vorrichtung durch Bewegen eines Reservierungs-Tokens von dem privaten Tupelraum der Ressource zu einem privaten Tupelraum der Vorrichtung reserviert.

20. Verfahren nach Anspruch 19,
**dadurch gekennzeichnet,**
**dass** das Reservierungs-Token ein Ticket-Spender-Tupel aufweist, aus dem ein Ticket, das eine Dienstnummer anzeigt, durch eine Vorrichtung entnommen werden kann, wonach eine Laufnummer des Ticket-Spender-Tupels inkrementiert wird und das Ticket-Spender-Tupel zurück zu dem privaten Tupelraum der Ressource bewegt wird, wodurch auf die Ressource zugegriffen wird, wenn der Verwalter eines virtuellen Reservierungsraums dahingehend erfolgreich ist, nach einem erfolgreichen Übereinstimmen der vorher entnommenen Dienstnummer mit der aktuellen Dienstnummer, die in dem Tupel enthalten ist, das Dienstnummerntupel aus dem privaten Tupelraum der Ressource zu nehmen.

21. Verfahren nach Anspruch 20,
**dadurch gekennzeichnet,**
**dass** der Verwalter (13) eines virtuellen Reservierungsraums, wenn die Ressource von einer Vorrichtung getrennt wird, ein Ticket-Spender-Tupel und ein Dienstnummerntupel aus der Reproduktion des privaten Tupelraums der Vorrichtung zurück zu seinem eigenen privaten Tupelraum wiedergewinnt und danach die Reproduktion des privaten Tupelraums der Vorrichtung abwirft.

22. Verfahren nach Anspruch 20 oder 21,
**dadurch gekennzeichnet,**
**dass** der Verwalter (13) eines virtuellen Reservierungsraums, wenn die Ressource von einigen anderen Vorrichtungen des Netzes, jedoch nicht von allen Vorrichtungen getrennt wird, die Reproduktionen der privaten Tupelräume, die sich auf die getrennten Vorrichtungen beziehen, als herabgesetzt markiert und diese später abwirft, während sichergestellt wird, dass die Laufnummer der Ressource korrekt inkrementiert wird.

23. Verfahren nach Anspruch 21 oder 22,
**dadurch gekennzeichnet,**
**dass** der Verwalter (13) eines virtuellen Reservierungsraums eines der Tupel oder eine der Reservierungsinformationen lediglich nach dem Ablauf einer vorbestimmten Aufschubdauer abwirft.

24. Verfahren nach einem der Ansprüche 17 bis 24,
**gekennzeichnet durch**
eine Synchronisationseinrichtung zum Erzeugen und Liefern von Synchronisationsinformationen für andere Vorrichtungen und Ressourcen in dem Netz.

25. Computersoftwareerzeugnis, das Programminformationen aufweist, die, wenn sie durch eine Programmausführungsvorrichtung ausgeführt werden, das Verfahren gemäß einem der Ansprüche 1 bis 16 ausführen.

26. Computersoftwareerzeugnis, das Programminformationen aufweist, die, wenn sie durch eine Programmausführungsvorrichtung ausgeführt werden, das Verfahren gemäß einem der Ansprüche 17 bis 24 ausführen.

## Revendications

1. Procédé de contrôle, au moyen d'un contrôleur d'espace de réservation virtuel (13) situé dans un dispositif de communication pour communiquer des données dans un réseau de communication non contrôlé, les réservations des ressources partagées dans ledit réseau de communication en fonction de l'information de réservation répartie parmi d'autres dispositifs du réseau dans lequel ledit contrôleur d'espace de réservation virtuel (13) comprend un espace de nuplet privé (23) associé au dispositif de communication, ledit espace de nuplet privé (23) comportant une information concernant les réservations de ressources,
**caractérisé par** la réplication des espace de nuplets privés de tous les autres dispositifs du réseau dans ledit contrôleur d'espace de réservation virtuel (13), où ledit espace de nuplet privé (23), conjointement avec les répliques correspondantes (25) des espace de nuplets privées desdits autres dispositifs dans ledit réseau de communication, forme un espace de nuplet virtuel général pour contrôler la réservation des ressources partagées dans ledit réseau.

2. Procédé selon la revendication 1, **caractérisé en ce que** lesdits espace de nuplets privés (23, 25) sont mis à jour lors de l'apparition de changements quelconques dans ou par rapport à leur contenu.

3. Procédé selon la revendication 1 ou 2, **caractérisé en ce que** ledit contrôleur d'espace de réservation virtuel (13) réserve une ressource comportant un espace de nuplet privé en déplaçant un jeton de réservation depuis l'espace de nuplet privé de la ressource dans son propre espace de nuplet privé.

4. Procédé selon la revendication 3, **caractérisé en ce que** ledit contrôleur d'espace de réservation virtuel (13) copie un nuplet de distributeur de tickets provenant de l'espace de nuplet privé d'une ressource à réserver, extrait un ticket indiquant un numéro de service, incrémente un nombre de séquences du nuplet de distributeur de tickets, et ramène le nuplet de distributeur de tickets à l'espace de nuplet privé de la ressource, où la ressource est accédée lorsque le contrôleur d'espace réservation virtuel réussit à prendre le nuplet de numéro de service depuis l'espace de nuplet privé de la ressource, lors de la correspondance réussie du numéro de service extrait précédemment avec le numéro de service présent contenu dans ledit nuplet.

5. Procédé selon la revendication 4, **caractérisé en ce que** ledit contrôleur d'espace de réservation virtuel (13), lorsque ladite ressource est déconnectée du dispositif de communication, élimine tout nuplet de distributeur de tickets, tickets, nuplet de numéro de service et/ou numéro de service ayant trait à ladite ressource depuis le contrôleur d'espace de réservation virtuel.

6. Procédé selon la revendication 4 ou 5, **caractérisé en ce que** ledit contrôleur d'espace de réservation virtuel (13), lorsque d'autres dispositifs dudit réseau sont déconnectés mais que ladite ressource n'est pas déconnectée du dispositif de communication, repère les répliques des espace de nuplets privés ayant trait aux dispositifs déconnectés comme étant obsolètes et les élimine plus tard tout en assurant que le nombre de séquences de ladite ressource est incrémenté correctement.

7. Procédé selon la revendication 5 ou 6, **caractérisé en ce que** ledit contrôleur d'espace de réservation virtuel (13) élimine l'un quelconque desdits nuplets ou de l'information de réservation uniquement après expiration d'une période de grâce prédéterminée.

8. Procédé selon l'une des revendications 3 à 7, **caractérisé en ce que** la réservation et l'accès de ladite ressource comprenant un espace de nuplet privé sont basés sur des périodes de leasing prédéterminées.

9. Procédé selon la revendication 1 ou 2, **caractérisé en ce que** ledit contrôleur d'espace de réservation virtuel (13) réserve une ressource ne comportant pas d'espace de nuplet privé en déplaçant un jeton de réservation depuis un espace de nuplet proxy dans son propre espace de nuplet privé, où ledit espace de nuplet proxy est une copie locale d'un espace de nuplet personnel fictif de ressource, ledit espace de nuplet proxy servant d'espace de nuplet privé réparti de ladite ressource.

10. Procédé selon la revendication 9, **caractérisé en ce que** ledit contrôleur d'espace de réservation virtuel (13) initialise une ressource ne comportant pas d'espace de nuplet privé en créant et en stockant un jeton de réservation pour la ressource dans ledit espace de nuplet proxy.

11. Procédé selon la revendication 9 ou 10, **caractérisé en ce que** ledit contrôleur d'espace de réservation virtuel (13) copie un nuplet de distributeur de tickets depuis ledit espace de nuplet proxy de ladite ressource à réserver, extrait un ticket indiquant un numéro de service, incrémente un nombre de séquences du nuplet de distributeur de tickets, et ramène le nuplet de distributeur de tickets audit espace de nuplet proxy de la ressource, où la ressource est accédée lorsque le contrôleur d'espace de réservation virtuel réussit à prendre le nuplet de numéro de service depuis ledit espace de nuplet proxy de la ressource, lors de la correspondance réussie du numéro de service extrait précédemment avec le numéro de service présent contenu dans ledit nuplet.

12. Procédé selon la revendication 11, **caractérisé en ce que** ledit contrôleur d'espace de réservation virtuel (13), lorsque ladite ressource est déconnectée du dispositif de communication, élimine tout nuplet de distributeur de tickets, ticket, nuplet de numéro de service et/ou numéro de service ayant trait à ladite ressource depuis le contrôleur d'espace de réservation virtuel.

13. Procédé selon l'une des revendications 11 à 12, **caractérisé en ce que** ledit contrôleur d'espace de réservation virtuel (13), lorsque d'autres dispositifs dudit réseau sont déconnectés mais que ladite ressource n'est pas déconnectée du dispositif de communication, repère les répliques des espace de nuplets privés ayant trait aux dispositifs déconnectés comme étant obsolètes et les élimine plus tard tout en s'assurant que le nombre de séquences de ladite ressource est incrémenté correctement.

14. Procédé selon la revendication 12 ou 13, **caractérisé en ce que** ledit contrôleur d'espace de réservation virtuel (13) élimine l'un quelconques desdits nuplets ou de l'information de réservation uniquement après expiration d'une période de grâce prédéterminée.

15. Procédé selon l'une des revendications 9 à 14, **caractérisé en ce que** la réservation et l'accès de ladite ressource ne comportant pas d'espace de nuplet privé sont basés sur des périodes de leasing prédéterminées.

16. Procédé selon l'une des revendications 1 à 15, **caractérisé par** des moyens de synchronisation pour générer et délivrer une information de synchronisation pour d'autres dispositifs et ressources dans le réseau.

17. Procédé de coopération avec un procédé selon l'une quelconque des revendications 1 à 16, pour contrôler au moyen d'un contrôleur d'espace de réservation virtuel (13) situé dans un dispositif de ressources (3) afin de délivrer une fonctionnalité pour d'autres dispositifs dans un réseau de communication non contrôlé, les réservations de la ressource dans ledit réseau de communication en fonction d'une information de réservation répartie parmi les autres dispositifs du réseau dans lequel ledit contrôleur d'espace de réservation virtuel (13) comporte un espace de nuplet privé associé au dispositif de ressources, ledit espace de nuplet privé comportant une information concernant les réservations de la ressource,
**caractérisé par** la réplication des espace de nuplets privés de tous les autres dispositifs du réseau dans ledit contrôleur d'espace de réservation virtuel (13), où ledit espace de nuplet privé, conjointement avec les répliques correspondantes des espace de nuplets privés desdits autres dispositifs dans ledit réseau de communication, forment un espace de nuplet virtuel général pour coordonner la réservation de la ressource dans ledit réseau.

18. Procédé selon la revendication 17, **caractérisé en ce que** lesdits espace de nuplets privés sont mis à jour lors de l'apparition de changements quelconques dans ou par rapport à leur contenu.

19. Procédé selon la revendication 17 ou 18, **caractérisé en ce que** ledit contrôleur d'espace de réservation virtuel (13) réserve la ressource pour un dispositif en déplaçant un jeton de réservation depuis l'espace de nuplet privé de la ressource dans un espace de nuplet privé du dispositif.

20. Procédé selon la revendication 19, **caractérisé en ce que** le jeton de réservation comprend un nuplet de distributeur de tickets depuis lequel un ticket indiquant un numéro de service peut être extrait par un dispositif, après qu'un nombre de séquences du nuplet de distributeur de tickets soit incrémenté et que le nuplet de distributeur de tickets soit ramené à l'espace de nuplet privé de la ressource, où la ressource est accédée lorsque le contrôleur d'espace de réservation virtuel réussit à prendre le nuplet de numéro de service depuis l'espace de nuplet privé de la ressource, lors de la correspondance réussie du numéro de service extrait précédemment avec le numéro de service présent contenu dans ledit nuplet.

21. Procédé selon la revendication 20, **caractérisé en ce que** ledit contrôleur d'espace de réservation virtuel (13), lorsque ladite ressource est déconnectée du dispositif, ramène tout nuplet de distributeur de tickets et nuplet de numéro de service depuis la réplique de l'espace de nuplet privé du dispositif dans son propre espace de nuplet privé et élimine ensuite la réplique de l'espace de nuplet privé du dispositif.

22. Procédé selon la revendication 20 ou 21, **caractérisé en ce que** ledit contrôleur d'espace de réservation virtuel (13), lorsque ladite ressource est déconnectée de certains autres dispositifs dudit réseau mais n'est pas déconnectée de tous les dispositifs, ledit contrôleur de réservation repère les répliques desdits espace de nuplets privés ayant trait aux dispositifs déconnectés désignés comme étant obsolètes et les élimine plus tard tout en assurant que le nombre de séquences de la ressource est incrémenté correctement.

23. Procédé selon la revendication 21 ou 22, **caractérisé en ce que** ledit contrôleur d'espace de réservation virtuel (13) élimine l'un quelconque desdits nuplets ou de l'information de réservation uniquement après expiration d'une période de grâce prédéterminée.

24. Procédé selon l'une quelconque des revendications 17 à 24, **caractérisé par** des moyens de synchronisation pour générer et délivrer une information de synchronisation pour d'autres dispositifs et ressources dans le réseau.

25. Logiciel comportant une information de programme qui, lors de l'exécution par un dispositif d'exécution de programmes, exécute le procédé selon l'une quelconque des revendications 1 à 16.

26. Logiciel comportant une information de programme qui, lors de l'exécution par un dispositif d'exécution de programmes, exécute le procédé selon l'une quelconque des revendications 17 à 24.
